(19) Europäisches Patentamt
European Patent Office
Office européen des brevets

(11) Veröffentlichungsnummer: **0 025 082**
**B1**

(12) # EUROPÄISCHE PATENTSCHRIFT

(45) Veröffentlichungstag der Patentschrift: **06.10.82**

(51) Int. Cl.³: **C 08 K 5/52**

(21) Anmeldenummer: **80102771.5**

(22) Anmeldetag: **20.05.80**

(54) **Herstellung eines festen intumeszierenden, phosphorhaltigen Flammschutzmittels und dessen Verwendung in Kunststoffen.**

(30) Priorität: **13.07.79 DE 2928349**

(43) Veröffentlichungstag der Anmeldung: **18.03.81 Patentblatt 81/11**

(45) Bekanntmachung des Hinweises auf die Patenterteilung: **06.10.82 Patentblatt 82/40**

(84) Benannte Vertragsstaaten: **BE FR GB IT LU NL**

(56) Entgegenhaltungen: **US-A-4 155 900**

(73) Patentinhaber: **CHEMISCHE WERKE HÜLS AG, Postfach 1320, D-4370 Marl 1 (DE)**

(72) Erfinder: **Grundmann, Raban, Dr., Ludwigshafener Strasse 6, D-4370 Marl (DE)**
Erfinder: **Maahs, Günther, Dr., Oderbruchstrasse 19, D-4370 Marl (DE)**

**EP 0 025 082 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Herstellung eines festen intumeszierenden, phosphorhaltigen Flammschutzmittels und dessen Verwendung in Kunststoffen.

Gegenstand der Erfindung sind Herstellung und Verwendung fester, intumeszierender, phosphorhaltiger Flammschutzmittel.

Intumeszierende Mittel wirken flammhemmend, indem sie unter stärkerer Erwärmung, z. B. unter Einwirkung eines Brandes, zu einer wärmeisolierenden, schwerbrennbaren Koksschicht aufblähen und hierbei u. a. das Abtropfen geschmolzenen, möglicherweise brennenden Materials unterdrücken.

Es gibt bereits intumeszierende Flammschutzsysteme, besonders für Anstrichmassen und Beschichtungen. Vereinzelt werden solche Systeme auch in thermoplastischen Polymeren eingesetzt. Im allgemeinen besteht die intumeszierende Mischung aus folgenden Bestandteilen:

a) Salz der Phosphor- oder Polyphosphorsäure (z. B. Ammoniumphosphat)
b) Polyhydroxylverbindung (z. B. Pentaerythrit)
c) Stickstoffverbindung (z. B. Melamin)
d) ggf. Halogenverbindung (z. B. Chlorparaffin)
(D. G. Brady, J. Fire Retard. Chem. 4 (1977) 3, 150).

Intumeszierende Anstrichmassen auf Basis von Ammoniumpolyphosphat werden z. B. in DE-A 1 794 343 und DE-A 2 359 699 offenbart. Durch die Verwendung des anorganischen Polyphosphats weisen solche Zusammensetzungen jedoch beim Mischen mit Thermoplasten Nachteile auf und führen zu schlechten physikalischen Eigenschaften des Kunststoffs. Auch die in DE-A 2 800 891 vorgeschlagenen Flammschutzmischungen für Polypropylen enthalten Ammoniumpolyphosphat oder Aminphosphate und weisen daher die gleichen Mängel auf.

Die DE-A 2 506 096 beschreibt die Behandlung von Cellulosematerial mit den Umsetzungsprodukten aus wäßriger Phosphorsäure und Ethylenoxid, die man neutralisiert und im gelösten Zustand auf die Cellulose aufbringt. Solche Lösungen oder auch eingeengte ölige oder dickflüssige Massen daraus eignen sich nicht für die thermoplastische Verarbeitung; insbesondere ist deren Wasserlöslichkeit ein Nachteil, da das Mittel in Gegenwart von Wasser vor allem aus den Randschichten, in denen es wirken soll, entfernt wird.

Demgegenüber beschreibt die US-A 4 010 137 flammhemmende Massen, beispielsweise aus Polypropylen, welche eine bei erhöhter Temperatur bereitete Mischung aus Polyphosphorsäure, Pentaerythrit und Melamin enthalten. Man muß aber dieses Flammschutzmittel unter erheblichem mechanischem Rühraufwand in der Schmelze bei Temperaturen bis 250°C herstellen; ein weiterer Nachteil ist, daß man das Produkt, um es bei üblichen Verarbeitungstemperaturen ohne Gefahr des Aufschäumens den Kunststoffen einverleiben zu können, noch thermisch entgasen muß, wobei das Mittel nicht nur einen wesentlichen Teil seiner an sich erwünschten Schäumfähigkeit verliert, sondern auch seine weiße Farbe einbüßt und gelblich bis braun wird.

Somit besteht noch immer Bedarf an einer intumeszierenden Flammfestformulierung für thermoplastische Kunststoffe wie Polypropylen, welche sich durch leichtes Herstellen, Farblosigkeit, bequemes einarbeiten, gute Verträglichkeit und hohe Wirkung zugleich auszeichnet.

Diese Aufgabe wird in der beanspruchten Weise gelöst.

Überraschend wurde nämlich gefunden, daß die Umsetzungsprodukte von Phosphorsäure oder phosphoriger Säure mit Ethylenoxid, die möglicherweise überwiegend aus Estern der allgemeinen Formel

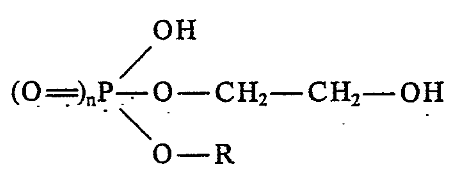

n = 1 oder 0
R = H oder $-CH_2-CH_2-OH$

bestehen, zusammen mit Melamin in schwerlösliche Feststoffe übergeführt werden können, die sowohl hervorragende flammhemmende Wirksamkeit als auch gute Verträglichkeit in thermoplastischen Kunststoffen ergeben.

Die Verringerung der Wasserlöslichkeit beim Erhitzen mit Melamin und die Verbesserung der Flammschutzwirkung bei Verwendung von Glykol als Hydroxylkomponente (z. B. im Vergleich mit dem bislang bevorzugten Pentaerythrit) müssen als überraschend und erfinderisch angesehen werden. Besonders hinsichtlich der Hydroxylkomponente bestand bisher die Ansicht, daß diese möglichst eine höhermolekulare Substanz, wie Dipentaerythrit, Zucker oder Stärke darstellen sollte.

Für die Herstellung der sauren Phosphorsäureester bestehen vielfältige Möglichkeiten; so ist z. B. die direkte Umsetzung von Phosphorsäure und Glykol möglich (Houben–Weyl, Methoden der

Organischen Chemie, Band 12/2, 144 bis 148 (1964)) oder die Reaktion von wäßriger Phosphorsäure oder Polyphosphorsäure mit Ethylenoxid (Houben—Weyl a. a. O., 307) sowie die Herstellung über cyclische Zwischenstufen aus Phosphortrichlorid und Glykol (Chem. Ber. 90, 801 bis 814, (1957)). Analog kann man auch die Phosphorigsäureester darstellen.

Man bevorzugt die Umsetzung von 0,1 bis 100%iger Phosphorsäure mit 0,5 bis 2 Mol Ethylenoxid bei Temperaturen von 10 bis 90° C, wobei man im besonderen eine etwa 85%ige Phosphorsäure bei 25° C mit 1 bis 1,25 Mol Ethylenoxid (pro Mol $H_3PO_4$) reagieren läßt. Man versetzt das Reaktionsprodukt mit einer wäßrigen Melaminsuspension (0,2 bis 1 Mol pro mol $H_3PO_4$) oder einer heißen wäßrigen Melaminlösung, dampft unter ständigem Rühren oder Mischen zur Trockne ein, ggf. im Vakuum, und trocknet und tempert bei Temperaturen zwischen 100 und 250° C, vorzugsweise bei 160 bis 200° C. Neben Glykol und Ethylenoxid kann man mit der Phosphorsäure oder phosphorigen Säure auch Propylenglykol, Propandiol-(1,3), Propylenoxid, Glycerin, Glycidol und Epichlorhydrin umsetzen, bevorzugt in Anteilen von 1 bis 50 Mol-% bezogen auf Glykol und/oder Ethylenoxid.

Als Stickstoffverbindung setzt man bevorzugt 0,2 bis 1 Mol Melamin pro Mol Phosphorsäure ein. Optimale Eigenschaften ergeben sich mit 0,4 bis 0,8, insbesondere mit etwa 0,6 Mol Melamin. es ist jedoch auch möglich, andere Stickstoffverbindungen im Gemisch mit Melamin zu verwenden. Beispiele dafür sind Harnstoff, Dicyandiamid, Methylharnstoff, Guanylharnstoff, Thioharnstoff, Guanylthioharnstoff, Phenylendiamin, Piperazin, Diethyltramin, Melaminaldehydharz, Polyamid, Polyurethan, Polyisocyanat; man setzt diese Verbindungen gewünschtenfalls mit bis zu 80, bevorzugt bis zu 50 Mol-%, bezogen auf verwendetes Melamin, ein.

Die Herstellung der flammgeschützten Thermoplasten gelingt nach bekannten Verfahren durch Mischen und Formen in Extrudern, Knetern, Walzen und Pressen oberhalb der Erweichungstemperatur der Polymeren. Je nach Grad der gewünschten Flammfestigkeit arbeitet man 5 bis 60 Gew.-% des Flammschutzmittels ein. Ein bevorzugter Bereich liegt bei 20 bis 30 Gew.-%. Eine Kombination mit anderen Flammschutzmitteln, z. B. mit Halogenverbindungen, besonders chlorierten Polyolefinen oder Paraffinen, mit Phosphorverbindungen, Antimonoxid, Aluminiumtrihydrat, Borverbindungen usw. kann vorteilhaft sein.

Die Verwendung der üblichen Kunststoffhilfsstoffe oder Füllstoffe wie Stabilisatoren, Gleitmittel, Farbstoffe, Pigmente, Weichmacher, Glasfasern usw. ist ebenfalls möglich.

Die beanspruchten intumeszierenden Flammschutzmittel sind durch Ausbildung der flammabweisenden Koksschicht in sehr unterschiedlichen Kunststoffen wirksam. besonders thermoplastische Polymere wie Polypropylen, Polyethylen, Polybuten, Polystyrol, Copolymere des Styrols, Polyvinylchlorid, Polyethylen- und Polybutylenterephthalat und Polyamid lassen sich auf die oben beschriebene Art flammhemmend ausrüsten. Bevorzugter Kunststoff ist ein flammgeschützes Polypropylen, das mit 20 bis 30 Gew.-% des Phosphorsäure-Ethylenoxid-Melamin-Produktes ausgerüstet ist.

Technisch fortschrittlich ist die verbesserte Wirksamkeit der neuen Flammschutzmittel, bezogen auf deren Einsatzmenge, sowie das optische Bild der ausgerüsteten Polymeren, die von glatt weißem, pigmentfreiem Aussehen sind.

Zur Prüfung der flammhemmenden Eigenschaften der erfindungsgemäßen Kunststoffe zieht man zweckmäßig sowohl den Sauerstoffindex gemäß »ASTM D-2863« und den Brandtest der Underwriters Laboratories, USA »UL-94« heran.

Zur Bestimmung des Sauerstoffindex (LOI) entzündet man ein Stäbchen der Abmessungen 150 x 6 x 3 mm senkrecht in einem Glaszylinder bei unterschiedlichen $N_2/O_2$-Gemischen am oberen Ende und ermittelt die $O_2$-Konzentration (in Vol.-%), bei der die Probe gerade noch brennt. Ein LOI gleich 20,9 bedeutet daher, daß die Probe bei Normalatmosphäre gerade noch brennt, bei niedrigerem $O_2$-Gehalt, z. B. 20,5% $O_2$, jedoch verlischt.

Der UL-94-Test verwendet Prüfkörper der Abmessungen 125 x 12,7 x 3 mm. Man spannt diese senkrecht ein und entzündet sie von unten zweimal 10 sec mit einer 20 mm-Bunsenbrennerflamme. Danach beurteilt man die mittlere Nachbrennzeit und die Bildung brennender Polymertropfen:

| Beurteilung | mittlere Nachbrennzeit | brennende Tropfen |
|---|---|---|
| V-0 | < 5 sec | nein |
| V-1 | < 25 sec | nein |
| V-2 | < 25 sec | ja |
| n. b. | > 25 sec | – |

## Beispiel 1

In einem Rührkolben, der 351 g (3 Mol) 85%ige Phosphorsäure enthält, leitet man bei 20 bis 25° C unter schwacher Kühlung 132 g (3 Mol) Ethylenoxid ein. Man verdünnt die Mischung mit 500 ml Wasser und versetzt sie unter Rühren mit 228 g (1,8 Mol) Melamin. Unter ständigem Mischen — am besten an einem Rotationsverdampfer — destilliert man das Wasser ab, wobei man das sich abscheidende

Festprodukt gegen Ende auf etwa 180° C erhitzt. Nach dem Entfernen aus dem Kolben mahlt oder pulverisiert man das weiße Produkt. Man erhält 594 g folgender Zusammensetzung (Produkt 1):

20,2% C, 4,85% H, 25,3% N, 14,2% P.

Beispiel 1a

Man arbeitet wie in Beispiel 1, setzt jedoch anstelle von 3 Mol Ethylenoxid 1,5 Mol Ethylenoxid und 1 Mol 2,3-Epoxipropanol (Glycidol) ein, wobei man das Produkt 1a erhält.

Beispiel 1b

Man arbeitet wie in Beispiel 1, setzt jedoch anstelle von 1,8 Mol Melamin eine Mischung aus 1 Mol Melamin und 3 Mol Harnstoff ein, wobei man das Produkt 1b erhält.

Beispiel 2

In 164 g (1 Mol) 50%ige phosphorige Säure und 700 ml Wasser leitet man unter Rühren bei Raumtemperatur 44 g (1 Mol) Ethylenoxid ein. Man rührt etwa 15 min nach und setzt 76 g Melamin (0,6 Mol) hinzu. Beim Erwärmen der Mischung auf 70° C erfolgt vollständige Auflösung. Man destilliert das Wasser von dem Reaktionsgemisch mit einem Rotationsverdampfer ab und erhitzt das Produkt auf eine Endtemperatur von 190° C. Rückstand: 179 g weißes Festprodukt (Produkt 2).
Analyse: 20,9% C, 4,55% H, 27,1% N, 16,7% P.

Beispiel 3

Man arbeitet die Produkte aus den Herstellungsbeispielen 1 und 2 auf einer Walze bei 180° C 20 min in Polypropylen (VESTOLEN® P 6200) ein und verpreßt die Massen zu 3 mm dicken Platten. Hieraus sägt man Stäbchen der Abmessungen 150 × 6 × 3 mm (LOI) und 125 × 12,7 × 3 mm (UL-94) und prüft diese nach den o. g. Brandtests.

| | Menge | LOI | UL-94 |
|---|---|---|---|
| Produkt | | | |
| 1 | 20 Gew.-% | 28,0 | V-O |
| 1 | 30 Gew.-% | 30,0 | V-O |
| 1a | 20 Gew.-% | 26,5 | — |
| 1b | 20 Gew.-% | 26,0 | — |
| 2 | 20 Gew.-% | 29,5 | V-O |
| 2 | 30 Gew.-% | 31,0 | V-O |
| zum Vergleich | | | |
| reines VESTOLEN P 6200 | — | 17,5 | n. b. |
| Vergleichsmischung+) | 20 Gew.-% | 22,5 | n. b. |

+) Ammoniumpolyphosphat : Melamin : Pentaerythrit = 3 : 1 : 1
(DE-AS 2 704 897, Bsp. 1 oder DE-AS 2 704 274, Bsp. 2)

Beispiel 4

Man arbeitet das Produkt aus Beispiel 1 mit 20 bis 40 Gew.-% in unterschiedliche Polymere ein. Die Prüfung nach ASTM D-2863 (Sauerstoffindex) führt zu folgenden Ergebnissen:

| Polymer | LOI ohne Flammschutzmittel | zugesetzte Menge von Produkt 1 | LOI mit Produkt 1 |
|---|---|---|---|
| Polyethylen | 17,5 | 40 Gew.-% | 25,0 |
| Polystyrol | 18,2 | 30 Gew.-% | 22,5 |
| Polyvinylchlorid | 42,5 | 30 Gew.-% | 49,0 |
| Polybutylenterephthalat (20 % Glasfasern) | 19,0 | 20 Gew.-% | 23,0 |

**Patentansprüche**

1. Verfahren zur Herstellung eines festen, intumeszierenden, phosphorhaltigen Flammschutzmittels für thermoplastische Kunststoffe, dadurch gekennzeichnet, daß man das Umsetzungsprodukt aus 1 Mol wäßriger Phosphorsäure oder phosphoriger Säure, 0,5 bis 2 Mol Ethylenoxid und 0,2 bis 1 Mol Melamin zur Trockne eindampft und den gewonnenen Feststoff bei 100 bis 250° C, bevorzugt 160 bis 200° C, tempert.
2. Verwendung eines Flammschutzmittels nach Patentanspruch 1 in thermoplastischen Kunststoffen in Anteilen von 5 bis 60 Gewichtsprozent der Gesamtmischung.
3. Verwendung eines Flammschutzmittels nach Patentansprüchen 1 und 2 in Propypropylen.

**Claims**

1. A process for the preparation of a solid, intumescent, phosphorus-containing flameproofing agent for thermoplastics, characterised in that the reaction product of 1 mol of aqueous phosphoric acid or phosphorous acid, from 0.5 to 2 mols of ethylene oxide and from 0.2 to 1 mol of melamine is evaporated to dryness and the resulting solid is heattreated at from 100 to 250° C, preferably from 160 to 200° C.
2. The use of a flameproofing agent according to claim 1 in thermoplastics in proportions of from 5 to 60 per cent by weight based on the total mixture.
3. The use of a flameproofing agent according to claims 1 and 2 in polypropylene.

**Revendications**

1. Procédé de fabrication d'un retardateur de combustion phosphoré solide intumescent pour matières synthétiques thermoplastiques, caractérisé par le fait que l'on évapore jusqu'à siccité le produit résultant de la réaction d'une mole d'acide phosphorique ou acide phosphoreux aqueux, de 0,5 à 2 moles d'oxyde d'éthylène et de 0,2 à 1 mole de mélamine et que l'on recuit le solide obtenu entre 100 et 250° C, de preférence entre 160 et 200° C.
2. Application d'un retardateur de combustion selon la revendication 1 dans des matières synthétiques thermoplastiques, en proportions de 5 à 60% en poids sur le mélange total.
3. Application d'un retardateur de combustion selon les revendications 1 et 2 dans le polypropylène.